# EUROPEAN PATENT APPLICATION

(11) **EP 4 664 656 A1**
(43) Date of publication of application: **17.12.2025**
(21) Application number: 24845903.4
(22) Date of filing: 16.07.2024
(51) Int. Cl.: H01M 50/489, H01M 50/446, H01M 50/449, H01M 50/431, H01M 50/443, H01M 50/403, H01M 10/0525, H01G 11/52

(54) **SEPARATOR SUBSTRATE, METHOD FOR MANUFACTURING SAME, AND SEPARATOR COMPRISING SAME**

(30) Priority: 21.07.2023 KR 20230095298
(71) Applicant: LG Energy Solution, Ltd., Seoul 07335 (KR)
(72) Inventor: LEE, So-Yeong, Daejeon 34122 (KR); BAE, Kyeong-Hui, Daejeon 34122 (KR); BAE, Won-Sik, Daejeon 34122 (KR); BAK, Byeong-Chan, Daejeon 34122 (KR)
(74) Representative: Hoffmann Eitle
(86) International application number: PCT/KR2024/010209
(87) International publication number: WO 2025/023600

(57) **Abstract**

The present disclosure relates to a separator substrate, a separator, an electrode assembly and an electrochemical device, and the separator substrate according to an embodiment of the present disclosure has a predetermined range of surface roughness Sa. Accordingly, the separator using the same maintains high adhesion strength, and has improved resistance characteristics by reducing an amount of slurry impregnation when forming a porous coating layer.

## Description

### TECHNICAL FIELD

The present disclosure relates to a separator substrate, a method for manufacturing the same and a separator including the same. More particularly, the present disclosure relates to a separator with improved adhesion strength and electrical resistance characteristics, and an electrode assembly and an electrochemical device including the same.

The present application claims priority to Korean Patent Application No. 2023-0095298 filed on July 21, 2023 in the Republic of Korea, the disclosure of which is incorporated herein by reference.

### BACKGROUND

A lithium secondary battery is manufactured through a process of inserting an electrode assembly including a positive electrode/a separator/a negative electrode into a battery case, injecting an electrolyte solution and sealing the battery case. The separator for use in the lithium secondary battery generally includes a polyolefin-based porous substrate, and to solve a short-circuit problem of the positive electrode and the negative electrode by thermal shrinkage behaviors of the polyolefin-based porous substrate, a separator having a coating layer formed from a mixture of inorganic particles and a binder polymer on the surface of the porous substrate has been developed to improve the strength and heat resistance of the separator. For example, such a separator may include Safety Reinforced Separators (SRS) and Ceramic Coated Separators (CCS).

Because the inorganic particles in the coating layer act as a spacer to maintain the physical shape of the separator, when the SRS or CCS is exposed to high temperature, it may be possible to suppress the shrinkage of the porous substrate, thereby preventing direct contact between the positive electrode and the negative electrode. Accordingly, the electrode assembly is manufactured by adhering the positive electrode and the negative electrode with the separator having the porous coating layer on two surfaces between the positive electrode and the negative electrode.

However, resistance rises due to impregnation of a slurry for forming the porous coating layer into a part of the porous polymer substrate. Recently, there is a growing demand for batteries having fast charging and high output characteristics, and many studies have been conducted to reduce battery resistance.

### DISCLOSURE

### Technical Problem

The present disclosure is directed to providing a separator capable of solving the above-described problems and an electrode assembly and an electrochemical device including the same.

Specifically, the present disclosure is directed to providing a separator substrate for reducing the resistance of a separator, one of the components of an electrochemical device, for example, a lithium secondary battery to reduce the resistance of the battery, a method for manufacturing the same, a separator using the same and an electrochemical device including the same.

In particular, the present disclosure is directed to providing a separator substrate with improved surface characteristics to suppress the resistance rise of the separator by reducing the degree of impregnation of a slurry for forming coating layer when forming the porous coating layer on the separator substrate and a method for manufacturing the same.

### Technical Solution

To solve the above-described problems,
according to an aspect of the present disclosure, there is provided a separator substrate of the following embodiments.

The separator substrate according to a first embodiment is,
a porous polymer substrate having surface roughness (Sa) of from 30 nm to 80 nm on at least one surface.

According to a second embodiment, in the first embodiment,
the surface roughness (Sa) of two surfaces of the porous polymer substrate may be from 30 nm to 70 nm.

According to another aspect of the present disclosure, there is provided a separator of the following embodiments.

The separator according to a third embodiment includes:
the separator substrate according to the first embodiment or the second embodiment, and
a porous coating layer present on at least one of the surfaces of the separator substrate having the surface roughness (Sa) of from 30 nm to 80 nm, the porous coating layer including inorganic particles and a binder polymer.

According to a fourth embodiment, in the third embodiment,
an adhesion strength between the separator substrate and the porous coating layer may be 30 gf/15 mm or more.

According to a fifth embodiment, in the third or fourth embodiment,
the adhesion strength between the separator substrate and the porous coating layer may be from 30 gf/15 mm to 140 gf/15 mm.

According to a sixth embodiment, in any one of the third to fifth embodiments,
an electrical resistance of the separator may be 1Ω or less.

According to a seventh embodiment, in any one of the third to sixth embodiments,
the electrical resistance of the separator may be 0.9Ω or less.

According to an eighth embodiment, in any one of the third to seventh embodiments,
an average particle size (D₅₀) of the inorganic particles may be 100 nm or more.

According to another aspect of the present disclosure, there is provided an electrode assembly of the following embodiments.

The electrode assembly according to a ninth embodiment includes:
the separator according to any one of the third to eighth embodiments, and
a positive electrode and a negative electrode, each present on each of two surfaces of the separator.

According to a tenth embodiment, in the ninth embodiment,
a resistance of the electrode assembly may be 1Ω or less.

According to an eleventh embodiment, in the ninth or tenth embodiment,
the resistance of the electrode assembly may be 0.9Ω or less.

According to another aspect of the present disclosure, there is provided an electrochemical device of the following embodiments.

The electrochemical device according to a twelfth embodiment includes:
the electrode assembly according to the ninth to eleventh embodiments and a case accommodating the electrode assembly.

According to another aspect of the present disclosure, there is provided a method for manufacturing a separator substrate of the following embodiments.

The method for manufacturing the separator substrate according to a thirteenth embodiment includes the steps of:
S1) extruding a polymer slurry to obtain a polymer sheet; and
S2) heat-setting the obtained polymer sheet,
wherein the heat-setting in the step S2 is performed at a temperature of between 119°C and 132°C.

### Advantageous Effects

The separator substrate according to an embodiment of the present disclosure may reduce the degree of impregnation of the slurry for forming coating layer when forming the porous coating layer on the separator substrate through the improved surface roughness Sa.

Accordingly, the separator using the same may have improved adhesion strength and resistance characteristics compared to the separator having the conventional porous coating layer to provide heat resistance and adhesion.

Accordingly, the electrochemical device using the separator may have improved heat resistance, low electrical resistance and high output characteristics.

### BEST MODE

Hereinafter, the present disclosure will be described in detail.

The term "include" or "comprise" when used in this specification, specifies the presence of stated elements, but does not preclude the presence or addition of one or more other elements, unless the contrary appears from the context.

In the specification, "A and/or B" refers to either A or B or both.

The certain terms used in the following description are provided for convenience but not intended to limit the present disclosure. Additionally, the words indicating directions such as upper, lower, left, right, front, rear, inner and outer indicate a direction in the drawings to which reference is made, or a direction facing or facing away from the geometric center of the stated devices, systems and elements.

According to an aspect of the present disclosure, there is provided a separator substrate having surface roughness Sa of from 30 nm to 160 nm on at least one surface as a porous polymer substrate.

### Separator substrate and its manufacturing method

According to an aspect of the present disclosure, there is provided a separator substrate having surface roughness Sa of from 30 nm to 80 nm on at least one surface as a porous polymer substrate.

To describe this, a feature of a method for manufacturing the separator substrate according to an embodiment of the present disclosure will be first described.

The method for manufacturing the separator substrate according to an aspect of the present disclosure includes the steps of:
S1) extruding a polymer slurry to obtain a polymer sheet; and
S2) heat-setting the obtained polymer sheet.

In this instance, according to an aspect of the present disclosure, the heat-setting in the step S2 is performed at the temperature of between 119°C and 132°C.

In an embodiment of the present disclosure, the heat-setting may be performed to forcibly hold the polymer sheet to remove residual stress in the sheet, but the purpose of the present disclosure is not limited thereto.

Conventionally, when manufacturing the porous polymer substrate as the separator substrate, the polymer slurry was extruded to obtain the polymer sheet, and the obtained polymer sheet was heat-set at high temperature. The inventors found that heat-setting of the polymer sheet induces surface crystallization of the polymer sheet, causing surface characteristics to change, and obtained the separator substrate having surface roughness Sa of from 30 nm to 80 nm by heat-setting at the specific range of temperatures to induce surface crystallization of the separator substrate.

In an embodiment of the present disclosure, the heat-setting in the step S2 may be performed at the temperature of between 119°C and 132°C, and specifically between 120°C and 131°C or between 121°C and 130°C. When the heat-setting temperature lies in the aforementioned range, surface roughness Sa may be from 30 nm to 80 nm. Additionally, when the temperature is overly high, the surface roughness of the separator substrate may increase, leading to increased resistance of the separator, and when the temperature is overly low, low surface roughness of the separator substrate may cause poor adhesion strength between the separator substrate and the porous coating layer, but the present disclosure is not limited thereto.

In an embodiment of the present disclosure, in the heat-setting process, heat may be applied while monoaxially stretching in MD (machine direction) or TD (transverse direction) direction, or biaxially stretching in MD and TD direction, but is not limited thereto.

The 'machine direction' as used herein refers to a direction parallel to a direction in which the process [extrusion->forming->stretching...] proceeds in the process of manufacturing the separator substrate. The machine direction can be identified through fiber orientation in the polymer of the separator substrate, and is a direction parallel to the fiber orientation. Accordingly, the 'transverse direction' refers to a direction perpendicular to the machine direction. The transverse direction may be a direction perpendicular to the fiber orientation in the polymer of the separator substrate.

According to an embodiment of the present disclosure, the method for manufacturing the separator substrate may further include, after the extrusion of the step S1), the steps of S1-2) shaping the extruded product into a sheet, S1-3) stretching the formed sheet, and S1-4) extracting a diluent from the stretched sheet. In this case, the step S2) may be performed to heat-set the sheet from which the diluent was extracted.

First, the extrusion of the step S1 will be described in detail.

In an embodiment of the present disclosure, the step S1) may include performing melt extrusion and processing of a polymer resin as a raw material of the separator substrate to obtain the porous polymer sheet.

In an embodiment of the present disclosure, the polymer resin may include any type of resin used as the raw material for manufacturing the separator substrate without limitation. The polymer resin may include any type of resin as the raw material for manufacturing the separator substrate, for example, polyolefin, polyethyleneterephthalate, polybutyleneterephthalate, polyacetal, polyamide, polycarbonate, polyimide, polyetheretherketone, polyethersulfone, polyphenylene oxide, polyphenylene sulfide, polyethylenenaphthalene or a mixture thereof. The polyolefin resin is formed by polymerization of olefin, and refers to a polymer produced from an olefin commonly used in the separator substrate as a monomer. For example, the polyolefin resin may include polyethylene; polypropylene; polybutylene; polypentene; polyhexene; polyoctene; a homopolymer of a monomer selected from ethylene, propylene, butene, pentene, 4-methylpentene, hexene, and octene; a copolymer of two or more of them; or a mixture thereof, but is not limited thereto.

In an embodiment of the present disclosure, the porous polymer substrate may be a polyolefin substrate.

In an embodiment of the present disclosure, the porous polymer substrate may be a polyethylene substrate.

In an embodiment of the present disclosure, the commonly used diluent may be used to extrude the polymer resin fed into an extruder. The diluent may include liquid or solid paraffin oil, wax and soybean oil, commonly used to manufacture the separator.

In an embodiment of the present disclosure, for the melting and extrusion, the commonly used single or twin screw extruder may be used, but is not limited thereto. In an embodiment of the present disclosure, a mixture of the diluent and the polymer resin may be fed into the extruder, followed by melting and mixing the polymer resin at high temperature to obtain a molten composition.

Subsequently, S1-2) the molten composition may be shaped into a sheet.

In an embodiment of the present disclosure, the molten composition may be extruded through a die of the extruder, for example, a T-die, and subsequently, may be shaped into a sheet by the commonly used casting or calendaring method using a water cooling or air cooling process. In an embodiment of the present disclosure, the molten composition may be compressed into a sheet shape by a pair of casting rolls in a cooling device equipped with the casting rolls.

In this instance, because the extrusion of the polymer sheet is generally performed at high temperature, for example, from 150°C to 300°C, the polymer sheet extruded through the extrusion unit may have, for example, high surface temperature of from 130°C to 200°C immediately after the extrusion, and the polymer sheet having the aforementioned surface temperature is cooled when it contacts the casting rolls. The surface temperature of the casting rolls may be generally from 20°C to 45°C, from 25°C to 45°C, from 35°C to 45°C, or 25°C.

Subsequently, the step S1-3) of stretching the formed sheet may be performed.

In an embodiment of the present disclosure, the stretching may include stretching the polymer sheet in the same direction or different directions. For example, the stretching may include stretching the polymer sheet in a direction parallel to each of MD direction and/or TD direction independently.

In an embodiment of the present disclosure, the stretching may be performed by, for example, roll type, tenter type sequential or simultaneous stretching. In an embodiment of the present disclosure, the stretching may be each, for example, performed at a stretch ratio of 3 times or more, or from 5 times to 12 times or from 6 times to 7 times. When the stretch ratio lies in the aforementioned numerical range, this may have a beneficial effect on thickness uniformity of the manufactured separator substrate and balanced properties between vertical direction and horizontal direction, but the present disclosure is not limited thereto.

In an embodiment of the present disclosure, S1-4), after the stretching, the diluent may be extracted from the stretched sheet to form pores.

In an embodiment of the present disclosure, the extraction of the diluent may be performed using an organic solvent. The organic solvent may include high extraction efficiency and fast-drying solvents, and may suitably include, for example, methyl ethyl ketone, methylene chloride, hexane or a mixture thereof, but the present disclosure is not limited thereto. In an embodiment of the present disclosure, the temperature at which the extraction is performed is not limited to a particular range and may include a temperature range in which the surface roughness of the porous substrate does not change.

In an embodiment of the present disclosure, the step S2) may include heat-setting the porous polymer sheet having the pores formed by extracting the diluent as described above. According to an embodiment of the present disclosure, there may be provided the separator substrate having the surface roughness Sa of from 30 nm to 70 nm on two surfaces of the porous polymer substrate.

According to an embodiment of the present disclosure, the surface roughness Sa of at least one surface of the porous polymer substrate may be from 35 nm to 70 nm.

According to an embodiment of the present disclosure, when the surface roughness Sa of at least one surface of the porous polymer substrate lies in the aforementioned range, this may have a beneficial effect on suppressing the resistance rise of the separator when forming the porous coating layer and ensuring proper adhesion strength between the separator substrate and the porous coating layer, but the effect of the present disclosure is not limited thereto.

Meanwhile, in addition to Sa measurement, the method for measuring the surface roughness of the separator substrate may include known methods for 2-dimensional (2D) direction surface roughness measurement such as Ra (Center line average roughness), Rmax (Maximum peak to valley roughness height), Rz (Ten Point Height) and Rg (Root Mean Square (RMS)). However, Ra, Rmax, Rz and Rg are a measure of 2D (line direction) surface roughness, but cannot identify surface roughness morphology. That is, two different surfaces may have the same value of at least one of Ra, Rmax, Rz or Rg, but different 3D roughness morphologies, and as a consequence, the impregnation amount of the slurry for forming the porous coating layer may change, making it difficult to determine whether resistance characteristics were improved or not. Considering this, the present disclosure defines the surface roughness of the separator substrate through Sa.

In an embodiment of the present disclosure, the surface roughness Sa may be measured through surface analysis of the porous polymer substrate using atomic force microscopy (AFM). For example, a sample of size 30 µm X 30 µm was obtained from the porous polymer substrate of which surface roughness is to be measured, and surface characteristics of each of two surfaces are measured. In this instance, the surface roughness Sa is measured through analysis of a difference of the average height across the entire surface based on the average height of the surface.

Hereinafter, the configuration of the porous polymer substrate will be described by way of example. However, the porous substrate is not limited to the components described below.

In an embodiment of the present disclosure, the porous polymer substrate refers to a substrate having pores therein as a porous ion-conducting barrier that prevents electrical contact between the negative electrode and the positive electrode and allows ions to pass through. The pores are connected to each other to allow gases or liquids to pass from one side of the substrate to the other side.

In an embodiment of the present disclosure, the porous polymer substrate may include a porous polymer film including a thermoplastic resin to provide a shut-down function. Here, the shut-down function refers to a function in which when the battery temperature becomes high, the thermoplastic resin melts to block the pores of the porous polymer substrate and stop ion migration, thereby preventing thermal runaway in the battery.

In an embodiment of the present disclosure, the thickness of the porous polymer substrate is not limited to a particular range so long as the aforementioned range based on the total thickness of the separator is satisfied, but may range, for example, from 5 µm to 300 µm, specifically from 5 µm to 100 µm, from 5 µm to 50 µm, from 5 µm to 20 µm, from 5 µm to 15 µm or from 9 µm to 12 µm.

In an embodiment of the present disclosure, the "thickness" of the porous polymer substrate may be measured by the commonly used method for measuring the thickness of each component of the separator. For example, the thickness of the porous polymer substrate may be measured using the commonly used thickness measuring instrument, for example, the commercially available thickness measuring instrument (Mitutoyo, VL-50S-B).

### Separator

According to an aspect of the present disclosure, there is provided a separator including the above-described porous polymer substrate as a separator substrate and a porous coating layer formed on at least one surface of the separator substrate and including inorganic particles and a binder polymer. In this instance, the porous coating layer may be formed on at least one of the surfaces of the separator substrate having the surface roughness Sa of from 30 nm to 160 nm.

According to another aspect of the present disclosure, there is provided a separator including the above-described porous polymer substrate as a separator substrate and a porous coating layer formed on at least one surface of the separator substrate and including inorganic particles and a binder polymer. In this instance, the porous coating layer is formed on at least one of the surfaces of the separator substrate having the surface roughness Sa of from 30 nm to 80 nm.

The porous coating layer includes a large amount of inorganic particles to improve safety of the separator and the binder polymer to hold the inorganic particles together. The inorganic particles may improve heat resistance of the separator, and the binder polymer may provide the separator surface with the ability to stick. In this instance, when the surface of the separator substrate on which the porous coating layer is formed is flat, the adhesion strength at the interface between the separator substrate and the porous coating layer may be low. However, when the surface of the separator substrate is overly rough, a large amount of the slurry for forming the coating layer may be impregnated into the pores of the separator substrate, and by the impregnated slurry, the inorganic particles and/or the binder polymer may infiltrate into the pores of the separator substrate and/or onto the surface of the separator substrate, causing the resistance rise of the separator. Accordingly, the separator having the porous coating layer on the separator substrate according to an aspect of the present disclosure may achieve the predetermined level of surface roughness, thereby preventing the infiltration of the inorganic particles and/or the binder polymer on the surface and suppressing the resistance rise.

In an embodiment of the present disclosure, the separator may be characterized in that the adhesion strength between the surface of the separator substrate having the surface roughness Sa of from 30 nm to 80 nm, specifically from 30 nm to 70 nm and the porous coating layer is 30 gf/15 mm or more. For example, the adhesion strength between the surface of the separator substrate having the aforementioned range of surface roughness Sa and the porous coating layer may be from 30 gf/15 mm to 140 gf/15 mm, from 30 gf/15 mm to 120 gf/15 mm, from 30 gf/15 mm to 100 gf/15 mm, from 30 gf/15 mm to 85 gf/15 mm, or from 32 gf/15 mm to 81 gf/15 mm. When the adhesion strength between the separator substrate and the porous coating layer of the separator lies in the aforementioned range, this may have a beneficial effect on process efficiency of the process of manufacturing an electrode assembly using the separator and stability of the separator.

The adhesion strength of the separator may be, for example, measured by the following method: sample the separator of which adhesion strength is to be measured into a width of 15 mm, and attach a target surface for adhesion strength measurement to a slide glass using a 18 mm-wide double-sided tape (3M) to bring them into contact with each other. Subsequently, peel strength between the separator substrate and the porous coating layer is measured using a UTM machine (Instron) in the conditions of 180°, 300 mm/min.

Additionally, in an embodiment of the present disclosure, the separator may be characterized in that electrical resistance is 1Ω or less. When the surface roughness Sa of the separator substrate lies in the aforementioned range, it may be possible to reduce the degree of impregnation of the slurry for forming the porous coating layer on the separator substrate, reduce the amount of impregnated slurry at the interface between the separator substrate and the porous coating layer, and reduce the amount of the inorganic particles and/or the binder polymer infiltrated into the separator substrate, thereby suppressing the resistance rise of the separator.

According to an embodiment of the present disclosure, the electrical resistance of the separator may be 0.9Ω or less. Specifically, the electrical resistance of the separator may be from 0.5Ω to 0.9Ω, from 0.6Ω to 0.85Ω, or from 0.63Ω to 0.82Ω.

The resistance of the separator may be, for example, measured through electrochemical impedance spectroscopy (EIS). Specifically, the separator whose resistance is to be measured is punched at 19Φ to prepare a CR2016 coin cell. In this instance, the positive electrode may be manufactured by applying a solution on an aluminum foil, drying the solution and punching at 12Φ, the solution in which an active material (NCMA), a binder polymer (PVDF) and a conductive material (CNT) are dissolved in a solvent (NMP) at a weight ratio of 97:1:2. The negative electrode may be manufactured by applying a solution on a copper current collector, drying the solution and punching at 12Φ, the solution in which an active material (Graphite), a binder polymer (SBR) and a conductive material (Super P) are dissolved in distilled water at a weight ratio of 95:0.5:4.5. The positive electrode/the separator/the negative electrode may be stacked in that order, and soaked in the electrolyte solution containing 1M LiPF₆, ethylene carbonate (EC) and ethyl methyl carbonate (EMC) (3/7 v/v) and 2 wt% vinylene carbonate (VC), thereby assembling the coin cell.

For the EIS measurement, for example, Solartron analytical EIS tool may be used, and resistance may be measured in the condition of frequency 100,000 Hz ~10,000 Hz.

Hereinafter, the configuration of the porous coating layer will be described by way of example. However, the configuration of the porous coating layer is not limited thereto.

In an embodiment of the present disclosure, the porous coating layer may include the inorganic particles and the binder polymer, and all or at least part of the surface of the inorganic particles may be coated by the binder polymer. In this instance, the inorganic particles are held together surface-to-surface and/or point-to-point by the medium of the binder polymer.

For example, the inorganic particles and the binder resin in the porous coating layer may be included at a weight ratio of from 99:1 to 1:99. Specifically, the inorganic particles and the binder resin in the porous coating layer may be included at the weight ratio of from 95:5 to 5:95, from 90:10 to 10:90, from 80:20 to 10:90, from 70:30 to 10:90, from 60:40 to 10:90, from 50:50 to 10:90, from 40:60 to 15:85, from 60:40 to 15:85, from 70:30 to 20:80, or 20:80. The porous coating layer has a structural feature of a porous layer in which a plurality of micropores is formed inside and the micropores are connected to each other to allow gases or liquids to pass from one side to the other side.

In an embodiment of the present disclosure, the porous coating layer may have a pore structure formed from pores or voids (interstitial volume) between the inorganic particles. The pore size or porosity (the ratio of pore volume) may be adjusted according to the particle size and particle size distribution. Through this structure, it is possible to increase the resistance to metallic impurities present in the electrode and suppress shrinkage of the porous polymer substrate, thereby enhancing safety of the electrochemical device.

In an embodiment of the present disclosure, the porous coating layer may include a plurality of nodes including the inorganic particles and the binder polymer that covers at least part of the surface of the inorganic particles; and at least one filament formed in the shape of thread from the binder polymer of the nodes, wherein the filament has a node connection part that extends from the node and connects the node to another node, and the node connection part has a 3D network structure formed by interconnection of the filaments originating from the binder polymer.

In an embodiment of the present disclosure, as described above, the porous coating layer may be formed through a Safety Reinforced Separator (SRS) manufacturing method, a Ceramic Coated Separator (CCS) manufacturing method, or any other known manufacturing method, but is not limited thereto.

In an embodiment of the present disclosure, the inorganic particles are not limited to a particular type and may include any type of inorganic particles that are electrochemically stable. That is, the inorganic particles that may be used in the present disclosure are not limited to a particular type and may include any type of inorganic particles in which oxidation and/or reduction reaction does not occur in the operating voltage range *(e.g.,* 0 to 5V vs Li/Li⁺) of the electrochemical device applied. Non-limiting examples of the inorganic particles may include at least one of BaTiO₃, Pb(Zr,Ti)O₃ (PZT), Pb₁₋ₓLaₓZr_{1-y}Ti_{y}O₃(PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, SiC or TiO₂.

In an embodiment of the present disclosure, the average particle size (D₅₀) of the inorganic particles may be, for example, 100 nm or more. Specifically, the average particle size (D₅₀) of the inorganic particles may be from 100 nm to 1 µm, or from 100 nm to 500 nm. When the average particle size of the inorganic particles lies in the aforementioned range, this may have a beneficial effect on suppressing the resistance rise of the separator, but the present disclosure is not limited thereto.

The particle size of the inorganic particles may be measured by the commonly used method for measuring particle size, and may be, for example, measured using Malvern Particle Size Analyzer (PSA). Additionally, the average particle size (D₅₀) refers to a particle size at 50% of cumulative particle size distribution, and may be measured through a laser diffraction method commonly used in the technical field. In this instance, the laser diffraction particle size measuring instrument may include, for example, Microtrac S3500.

In an embodiment of the present disclosure, the binder resin may include, for example, polyvinylidene fluoride-based resin (PVdF-based resin) and/or acrylic binder. In an embodiment of the present disclosure, the PVdF-based resin may include at least one of vinylidene fluoride homopolymer (i.e., polyvinylidene fluoride), copolymers of vinylidene fluoride with monomers to be polymerized with the vinylidene fluoride or a mixture thereof. In an embodiment of the present disclosure, the monomer may include, for example, fluorinated monomers and/or chlorine-based monomers. Non-limiting examples of the fluorinated monomer may include at least one of vinyl fluoride; trifluoroethylene (TrFE); chlorofluoroethylene (CTFE); 1,2-difluoroethylene; tetrafluoroethylene (TFE); hexafluoropropylene (HFP); perfluoro(alkylvinyl)ether such as perfluoro(methylvinyl)ether (PMVE), perfluoro(ethylvinyl)ether (PEVE) and perfluoro(propylvinyl)ether (PPVE); perfluoro(1,3-dioxole); or perfluoro(2,2-dimethyl-1,3-dioxole) (PDD). The acrylic binder may include, for example, polyacrylic acid (PA), polyacrylonitrile (PAN), polyacrylamide (PAA), or (meth)acrylic polymer or a mixture thereof, but the present disclosure is not limited thereto. The (meth)acrylic polymer refers to a polymer including (meth)acylic acid ester as a monomer. The monomer may include, for example, butyl(meth)acrylate, 2-ethylhexyl(meth)acrylate, ethyl(meth)acrylate, methyl(meth)acrylate, n-propyl(meth)acrylate, isopropyl(meth)acrylate, t-butyl(meth)acrylate, pentyl(meth)acrylate, n-octyl(meth)acrylate, isooctyl(meth)acrylate, isononyl(meth)acrylate, lauryl(meth)acrylate, tetradecyl(meth)acrylate or a mixture thereof, but the present disclosure is not limited thereto.

In an embodiment of the present disclosure, besides, the binder polymer may include an organic binder or an aqueous binder that may be used in the porous coating layer or a mixture thereof, and is not limited thereto.

In an embodiment of the present disclosure, the porous coating layer is not limited to a particular thickness but so long as the aforementioned ratio range to the total thickness of the separator is satisfied, the thickness of the porous coating layer may be, for example, from 0.5 µm to 50 µm, specifically from 0.5 µm to 10 µm, from 0.5 µm to 5 µm or from 1.5 µm to 3 µm.

### Electrode assembly

According to another aspect of the present disclosure, there is provided an electrode assembly including the above-described separator, and a positive electrode and a negative electrode, each formed on each of two surfaces of the separator.

As described above, the separator according to an aspect of the present disclosure has improved resistance characteristics and low resistance. Accordingly, the electrode assembly using the separator has low resistance and high output characteristics.

In an embodiment of the present disclosure, the resistance of the electrode assembly may be 1Ω or less.

In an embodiment of the present disclosure, the resistance of the electrode assembly may be 0.9Ω or less. Specifically, the resistance of the electrode assembly may be from 0.5 Ω to 1 Ω, from 0.5 Ω to 0.9 Ω, from 0.5Ω to 0.8 Ω, from 0.5 Ω to 0.7 Ω or from 0.52 Ω to 0.62 Ω.

In an embodiment of the present disclosure, the resistance of the electrode assembly may be measured by the following method.

The positive electrode and the negative electrode are respectively attached to two surfaces of the separator and pressure is applied to the positive electrode and the negative electrode with the separator interposed between the positive electrode and the negative electrode to prepare the electrode assembly having 50 mAh theoretical capacity. Subsequently, CC/CV charge in 4.2 V, 2.5 mA cut-off conditions and 2.5 V, 50 mA CC discharge are repeated three times. Subsequently, after setting to SOC 50%, the fully charged cell is discharged with the current of 250 mA for 30 seconds, then the voltage drop at SOC50 is recorded, and DC-resistance is calculated using R=V/I (Ohm's law). In this instance, the composition of the positive electrode, the negative electrode and the electrolyte solution may use the composition described in the method for measuring the resistance of the separator.

In an embodiment of the present disclosure, the use of the separator using the separator substrate may provide an electrochemical device having high output characteristics by virtue of high adhesion strength with the positive electrode and the negative electrode and reduced resistance of the electrode assembly.

Hereinafter, the configuration of the electrode will be described by way of example. However, the present disclosure is not limited thereto.

In an embodiment of the present disclosure, each of the positive electrode and the negative electrode may include a current collector and a coating of electrode active material on the current collector, and is not limited to a particular size or shape.

In an embodiment of the present disclosure, the positive electrode active material may include, for example, lithium transition metal oxide; lithium metal iron phosphate; lithium nickel-manganese-cobalt oxide; oxide with partial substitution of other transition metal in lithium nickel-manganese-cobalt oxide; or two or more of them, but is not limited thereto. Specifically, the positive electrode active material may include, for example, layered compounds such as lithium cobalt oxide (LiCoO₂), lithium nickel oxide (LiNiO₂) or compounds substituted with one or more transition metals; lithium manganese oxide of formula Li₁₊ₓMn₂₋ₓO₄ (where x is 0 to 0.33), LiMnO₃, LiMn₂O₃, LiMnO₂; lithium copper oxide (Li₂CuO₂); vanadium oxide such as LiV₃O₈, LiV₃O₄, V₂O₅, Cu₂V₂O₇; Ni site lithium nickel oxide represented by formula LiNi₁₋ₓMₓO₂ (where M = Co, Mn, Al, Cu, Fe, Mg, B or Ga, x = 0.01 to 0.3); lithium manganese composite oxide represented by formula LiMn₂₋ₓMₓO₂ (where M = Co, Ni, Fe, Cr, Zn or Ta, x = 0.01 to 0.1) or Li₂Mn₃MO₈ (where M = Fe, Co, Ni, Cu or Zn); lithium metal phosphate LiMPO₄ (where M = Fe, Co, Ni, or Mn); lithium nickel-manganese-cobalt oxide Li₁₊ₓ(NiₐCo_{b}Mn_{c})₁₋ₓO₂ (x = 0 to 0.03, a = 0.3 to 0.95, b = 0.01 to 0.35, c = 0.01 to 0.5, a+b+c=1); oxide Liₐ[Ni_{b}Co_{c}Mn_{d}Alₑ]_{1-f}M1_{f}D₂ with partial substitution of aluminum in lithium nickel-manganese-cobalt oxide (M1 is at least one selected from the group consisting of Zr, B, W, Mg, Ce, Hf, Ta, La, Ti, Sr, Ba, F, P and S, 0.8≤a≤1.2, 0.5≤b≤0.99, 0<c<0.5, 0<d<0.5, 0.01≤e≤0.1, 0≤f≤0.1); oxide Li₁₊ₓ(NiₐCo_{b}Mn_{c}M_{d})₁₋ₓO₂ with partial substitution of other transition metal in lithium nickel-manganese-cobalt oxide (x = 0 to 0.03, a = 0.3 to 0.95, b = 0.01 to 0.35, c = 0.01 to 0.5, d = 0.001 to 0.03, a+b+c+d=1, M is any one selected from the group consisting of Fe, V, Cr, Ti, W, Ta, Mg and Mo), disulfide compounds; Fe₂(MoO₄)₃, but is not limited thereto.

In an embodiment of the present disclosure, the negative electrode active material may include, for example, lithium metals or lithium alloys, soft carbon, hard carbon, natural graphite, Kish graphite, pyrolytic carbon, mesophase pitch based carbon fiber, meso-carbon microbeads, mesophase pitches, petroleum or coal tar pitch derived cokes, silicon (Si)-based compounds (M-SiOx (M=Li, Mg, Ca, Al or Ti, 0≤x<2)) or a mixture thereof, but is not limited thereto.

### Electrochemical device

According to another aspect of the present disclosure, there may be provided an electrochemical device including the above-described electrode assembly and a case accommodating the electrode assembly.

In an embodiment of the present disclosure, the electrochemical device may include, for example, a primary battery, a secondary battery, a super capacitor, and an electric double layer capacitor. The secondary battery may be, more specifically, a lithium ion secondary battery.

In an embodiment of the present disclosure, the case may include any commonly used battery case, and is not limited to a particular shape according to the use of the battery. For example, the case may have a cylindrical, prismatic, pouch or coin shape using a can.

When the electrode assembly is completed as described above, the electrode assembly may be received in the case and the case may be sealed according to the commonly used method to manufacture the electrochemical device, and in this instance, the electrochemical device may be, for example, a lithium secondary battery.

Hereinafter, the present disclosure will be described in more detail through examples, but the following examples are provided for illustration purposes, and the scope of the present disclosure is not limited thereto.

### [Manufacture of separator substrate]

A porous polymer substrate was manufactured by the following method.

A polyethylene polymer having the molecular weight of 600,000 (g/mol) and an antioxidant agent were mixed in an extruder, followed by melting in the temperature condition of 200°C and extrusion through a T-die, and cooling and shaping into a sheet on casting rolls having the surface temperature of 25°C and made of stainless steel to obtain a polymer sheet. The polymer sheet having passed through the casting rolls was stretched in MD direction (stretch ratio 7 times, stretching temperature 115°C) and TD direction (stretch ratio 6 times, stretching temperature 125°C) using a tenter type sequential stretching machine at the rear of the casting rolls, and a diluent was extracted using methylene chloride. Subsequently, the obtained polymer sheet was heat-set at the temperature described in the following TABLE 1 to obtain a porous polymer substrate. The heat-setting was performed while holding the polymer sheet in MD direction and TD direction, and the thickness of the obtained porous polymer substrate was 9 µm, and porosity was 45 vol%.

**[TABLE 1]**

| Classification | Heat-setting temperature (°C) |
|---|---|
| Comparative Example 1 | 117 |
| Example 1 | 121 |
| Example 2 | 125 |
| Example 3 | 130 |
| Comparative Example 2 | 134 |

### [Manufacture of separator]

Using each of the as-prepared porous polymer substrates of Comparative Examples 1 and 2 and Examples 1 to 3 as a separator substrate, a separator was manufactured by forming a porous coating layer on two surfaces of the separator substrate by the following method.

### Preparation of porous coating layer

A PVDF-HFP binder (Mw 500,000 g/mol, HFP 15 wt%) and inorganic particles (Al₂O₃) were mixed in a proper solvent at a weight ratio of 80:20 to prepare a slurry for inorganic matter coating. The as-prepared slurry for inorganic matter coating was applied to the entire surface of the porous substrate by a dip coating method, and dried by a wet-phase separation method to form a porous coating layer on each of the upper surface and the lower surface of the porous substrate to the thickness of 3 µm.

Accordingly, a separator having the total thickness of 15 µm was manufactured.

### [Manufacture of electrode assembly]

Each of the as-prepared separators was used as a separator, a negative electrode and a positive electrode were prepared as follows and each was attached to one surface of the separator to manufacture an electrode assembly.

### Manufacture of negative electrode

An active material (Graphite), a binder polymer (SBR) and a conductive material (Super P) were mixed in distilled water at a weight ratio of 95:0.5:4.5 to prepare a negative electrode composition.

The negative electrode composition was applied to one surface of a copper current collector and dried to prepare a negative electrode. The loading amount of the negative electrode was 5.3 mAh/cm².

### Manufacture of positive electrode

An active material (NCMA), a binder polymer (PVDF) and a conductive material (CNT) were mixed in a solvent (NMP) at a weight ratio of 97:1:2 to prepare a positive electrode composition.

The positive electrode composition was applied to one surface of an aluminum current collector and dried to prepare a positive electrode. The loading amount of the positive electrode was 4.949 mAh/cm².

### Assembling of electrode assembly

The as-prepared separator was placed between the positive electrode and the negative electrode which were positioned on the opposite sides of the separator, and they were rolled and dried in the conditions of 90°C, 4MPa, 1s to obtain an electrode assembly having the theoretical capacity of 50 mAh.

### [Evaluation of properties]

For each of the separator substrate, the separator and the electrode assembly in the manufacturing order, properties were evaluated by the following method and the results are shown in TABLE 2 below.

In the following TABLE 2, the adhesion strength of the separator refers to adhesion strength between the surface on which surface roughness was measured and the porous coating layer.

### Measurement of surface roughness Sa of separator substrate

Surface analysis of the porous polymer substrate was performed using atomic force microscopy (AFM) to obtain a height map of a surface and surface roughness Sa was measured by analyzing a difference of the average height across the entire surface based on the average height of the surface.

The surface roughness measurement was performed on two surfaces of the separator substrate.

### Measurement of adhesion strength of separator

The separator was sampled into a width of 15 mm and a target surface for adhesion strength measurement was attached to a slide glass using a 18 mm-wide double-sided tape (3M) to bring them into contact with each other. Subsequently, peel strength between the separator substrate and the porous coating layer was measured using a UTM machine (Instron) in the conditions of 180°, 300 mm/min.

The adhesion strength measurement was performed on two surfaces of the separator.

### Measurement of resistance of separator

A CR2016 coin cell was manufactured and resistance of the separator was measured by EIS method as follows.

The separator to be measured was punched at 19Φ to prepare the separator. As each of the positive electrode and the negative electrode manufactured when manufacturing the electrode assembly was punched at 12Φ, the positive electrode/the separator/the negative electrode were stacked in the CR2016 coin cell case in that order, an electrolyte solution containing 1M LiPF₆, ethylene carbonate (EC) and ethyl methyl carbonate (EMC) (3/7 v/v) and 2 wt% vinylene carbonate (VC) was injected, and the cap was closed to prepare to the coin cell.

The EIS measurement was done using Solartron analytical EIS tool, and resistance was measured in the frequency condition of from 100,000 Hz to 10,000 Hz.

### Measurement of resistance of electrode assembly

To measure resistance of the separator, resistance of the as-prepared electrode assembly was measured by the following method.

CC/CV charge in 4.2 V, 2.5 mA cut-off conditions and 2.5 V, 50 mA CC discharge were repeated three times. Subsequently, after setting to SOC 50%, the fully charged cell was discharged with a current of 250 mA for 30 seconds, the voltage drop at SOC50 was recorded, and DC-resistance was calculated using R=V/I (Ohm's law).

**[TABLE 2]**

| Classification | Separator substrate | Separator | | Electrode assembly |
|---|---|---|---|---|
| | Surface roughness (Sa) | Adhesion strength (gf/15mm) | Resistance (Ohm, Ω) | Resistance (Ohm, Ω) |
| Comparative Example 1 | 28.2 | 7 | 0.45 | 0.48 |
| Example 1 | 36.5 | 32 | 0.63 | 0.52 |
| Example 2 | 54.8 | 51 | 0.78 | 0.56 |
| Example 3 | 69.1 | 81 | 0.82 | 0.62 |
| Comparative Example 2 | 90.4 | 197 | 2.32 | 1.18 |

As can be seen from TABLE 1 and TABLE 2 above, the porous polymer substrate as the separator substrate obtained by heat-setting at the temperature of between 119°C and 132°C has the surface roughness Sa of from 30 nm to 70 nm, and through this, it was confirmed that the porous polymer substrate maintains the optimal level of adhesion strength and has low resistance. Moreover, it was confirmed that it is possible to significantly reduce the resistance of the electrode assembly using the same.

In contrast, it was confirmed that the porous polymer substrate as the separator substrate obtained by heat-setting in the temperature range outside of the aforementioned range has the surface roughness Sa outside of the range between 30 nm and 70 nm. In particular, in the case of Comparative Example 1 having the surface roughness Sa of less than 30 nm, it was confirmed that the separator has low resistance but adhesion strength is poor, and in the case of Comparative Example 2 having the surface roughness Sa of more than 70 nm, adhesion strength is very high and poor properties are found in terms of resistance of the separator, and thus the resistance of the electrode assembly using the same was very high when measured.

## Claims

1. A separator substrate as a porous polymer substrate having surface roughness (Sa) of from 30 nm to 80 nm on at least one surface.

2. The separator substrate according to claim 1, wherein the surface roughness (Sa) of two surfaces of the porous polymer substrate is from 30 nm to 70 nm.

3. A separator comprising:
the separator substrate according to claim 1; and
a porous coating layer present on at least one of the surfaces of the separator substrate having the surface roughness (Sa) of from 30 nm to 80 nm, the porous coating layer including inorganic particles and a binder polymer.

4. The separator according to claim 3, wherein an adhesion strength between the separator substrate and the porous coating layer is 30 gf/15 mm or more.

5. The separator according to claim 4, wherein the adhesion strength between the separator substrate and the porous coating layer is from 30 gf/15 mm to 140 gf/15 mm.

6. The separator according to claim 3, wherein an electrical resistance of the separator is 1Ω or less.

7. The separator according to claim 6, wherein the electrical resistance of the separator is from 0.9Ω or less.

8. The separator according to claim 3, wherein an average particle size of the inorganic particles is 100 nm or more.

9. An electrode assembly comprising:
the separator according to any one of claims 3 to 8; and
a positive electrode and a negative electrode, each present on each of two surfaces of the separator.

10. The electrode assembly according to claim 9, wherein a resistance of the electrode assembly is 1Ω or less.

11. The electrode assembly according to claim 10, wherein the resistance of the electrode assembly is 0.9Ω or less.

12. An electrochemical device comprising:
the electrode assembly according to claim 9; and
a case accommodating the electrode assembly.

13. A method for manufacturing a separator substrate, the method comprising the steps of:
S1) extruding a polymer slurry to obtain a polymer sheet; and
S2) heat-setting the obtained polymer sheet,
wherein the heat-setting in the step S2 is performed at a temperature of between 119°C and 132°C.
